# EUROPÄISCHE PATENTSCHRIFT

(11) **EP 0 836 002 B1**
(45) Veröffentlichungstag und Bekanntmachung des Hinweises auf die Patenterteilung: **16.01.2002**
(21) Anmeldenummer: 97116598.0
(22) Anmeldetag: 24.09.1997
(51) Int. Cl.: F02M 31/16, F02M 25/07, F02M 35/10

(54) **Vorrichtung zur Wärmeübertragung zwischen strömenden Medien für eine Brennkraftmaschine**
Device for transfering heat between flowing fluids for a combustion engine
Dispositif de transfert de chaleur entre fluides en écoulement pour un moteur à combustion

(30) Priorität: 10.10.1996 DE 19641700
(43) Veröffentlichungstag der Anmeldung: 15.04.1998
(73) Patentinhaber: DaimlerChrysler AG, 70567 Stuttgart (DE)
(72) Erfinder: Butz, Hans, 73728 Esslingen (DE); Klingmann, Rolf, 73655 Plüderhausen (DE)

(56) Entgegenhaltungen:
- EP-A- 0 499 781
- EP-A- 0 736 684
- DE-A- 3 034 971
- PATENT ABSTRACTS OF JAPAN vol. 7, no. 50, 26. Februar 1983 & JP 57 198359 A (TOYOTA JIDOSHA KOGYO KK), 4. Dezember 1982

## Beschreibung

Die Erfindung betrifft eine Vorrichtung zur Wärmeübertragung zwischen strömenden Medien für eine Brennkraftmaschine nach dem Oberbegriff des Anspruchs 1.

Es ist bekannt, daß beim Betrieb einer Brennkraftmaschine eine Kühlung der beim Verbrennungsprozeß entstandenen Abgase die Bildung von Schadstoffen, insbesondere Stickstoffoxiden, aus den Bestandteilen des Abgases behindert, was insbesondere auch im Falle einer Rückführung von Abgasen in das Frischluft-Zuführsystem der Brennkraftmaschine von Vorteil ist. Oft ist dabei vorgesehen, die dem Abgas zu entziehende Wärme auf das zirkulierende Kühlmittel der Brennkraftmaschine zu übertragen. Darüberhinaus liegt die Erkenntnis vor, daß Kraftstoff bei bestimmten, über den üblicherweise vorliegenden Umgebungstemperaturen liegenden Temperaturen eine optimale Zündwilligkeit aufweist, so daß eine Erwärmung des Kraftstoffes vor der Zuführung zur Brennkraftmaschine Vorteile bei der Gemischbildung mit sich bringt.

Die DE-PS 30 34 971 C2 offenbart einen zweikanaligen Wärmetauscher für eine Brennkraftmaschine, welcher sowohl vom Kühlmittel der Brennkraftmaschine als auch von einem zur Rückführung in das Ansaugsystem vorgesehenen Abgasstrom durchströmt ist. Der Wärmetauscher besteht aus einem langgestreckten, zweiteiligen Gehäuse, an dessen Enden jeweils eine Öffnung zum Einlaß bzw. zum Auslaß der Kühlmittelströmung angeordnet ist. Innerhalb des somit einen Kühlmittelkanal ausbildenden Gehäuses ist U-förmig ein mit parallel zum Kühlmittelkanal verlaufenden Schenkeln ein abgasführender Abgaskanal angeordnet, dessen Kanalwand eine Wärmeleitwand im Inneren des Wärmetauschers ist, welche den Abgaskanal einerseits und den Kühlmittelkanal andererseits begrenzt und von beiden Medien bestrichen ist. Eine Einlaßöffnung des Abgaskanals im Gehäuse des Wärmetauschers ist mit der Abgasleitung der Brennkraftmaschine verbunden, und eine Auslaßöffnung des Abgaskanals mündet in die Luftzuführung eines Vergasers, so daß der Abgaskanal im Wärmetauscher eine Abgasrückführungsleitung der Brennkraftmaschine darstellt.

Eine Vorwärmung von Kraftstoff bei der Zuführung in die Zylinder der Brennkraftmaschine ist durch diese Vorrichtung nicht vorgesehen, wobei dieser Mangel dadurch behoben werden soll, daß die Abgasleitung der Brennkraftmaschine in einem Abschnitt benachbart einer gemischführenden Leitung stromab des Vergasers verläuft, wodurch eine Aufheizung des bereiteten Kraftstoff/Luft-Gemisches vor dem Eintritt in die Brennkammern angestrebt wird. Diese Maßnahme erfordert jedoch einen sehr hohen Bauaufwand und ist darüberhinaus nur stromab einer gemischbildenden Einrichtung anwendbar, da eine Erwärmung des Kraftstoffstroms bei der Kraftstoffzuleitung auf diese Weise durch die Gefahr der schädlichen Dampfblasenbildung verhindert ist. Um neben der Abkühlung der Abgase durch das Kühlmittel der Brennkraftmaschine eine optimale Vorwärmung des Kraftstoffes zu erreichen, ist es daher notwendig, neben dem Wärmetauscher zwischen Abgas und Kühlmittel an anderer Stelle im Kühlmittelkreislauf der Brennkraftmaschine eine zweite Vorrichtung zur Übertragung von Wärme vom Kühlmittel auf den in der Kraftstoffleitung geführten Kraftstoff vorzusehen.

Aufgabe der Erfindung ist es daher, eine Vorrichtung zur Übertragung von Wärme zwischen strömenden Medien unterschiedlicher Temperaturen für eine Brennkraftmaschine zu schaffen, welche mit dem Vorteil kompakter Bauweise in einem Bauteil mehrere Wärmeübertragungs-Vorgänge ermöglicht.

Diese Aufgabe wird erfindungsgemäß mit den Merkmalen des Anspruchs 1 gelöst.

Eine sehr kompakte Bauweise einer Vorrichtung zur Übertragung von Wärme vom Abgasstrom einer Brennkraftmaschine auf das Kühlmittel einerseits und von dem Kühlmittel auf den der Brennkraftmaschine zuzuführenden Kraftstoff andererseits ist dadurch erreicht, daß durch eine Öffnung in der Außenwand eines Wärmetauschers mit einem Abgas der Brennkraftmaschine führenden Abgaskanal und einem parallel zum Abgaskanal verlaufenden, Kühlmittel der Brennkraftmaschine führenden Kühlmittelkanal, welche jeweils durch eine Wärmeleitwand im Inneren des Wärmetauschers getrennt sind, ein von Kraftstoff durchströmbarer Wärmetauschbehälter in den Kühlmittelkanal einragt. Die Erwärmung des Kraftstoffs verhindert die Versulzung von Dieselkraftstoff bei niedrigen Außentemperaturen und erhöht die Zündwilligkeit des der Brennkraftmaschine zugeführten Kraftstoffs. Der Wärmetauschbehälter ist Teil eines in der Kraftstoffleitung der Brennkraftmaschine angeordneten Kraftstoffverteilers, welcher einen Thermostaten zur Regelung eines zur Erwärmung durch den Wärmetauschbehälter leitbaren Kraftstrom-Teilstroms aufweist. Der Thermostat steuert die Kraftstoffverteilung derart, daß bei Erreichen einer bestimmten Kraftstofftemperatur weniger Kraftstoff infolge einer Durchströmung des Kraftstoffbehälters erwärmt wird und somit eine Dampfblasenbildung verhindert ist.

Der Abgaskanal des Wärmetauschers ist vorzugsweise Teil einer Abgasrückführungsleitung der Brennkraftmaschine, welche von. einem regelbaren Abgasrückführungs-Ventil beherrscht ist. Die Wärmeübertragung vom Abgas auf das Kühlmittel der Brennkraftmaschine bewirkt eine Abkühlung des rückzuführenden Abgases, was nach der Beimischung des rückgeführten Abgases in die den Zylindern der Brennkraftmaschine zuzuführenden Frischluft die Temperatur des Verbrennungsluftgemisches erniedrigt. Somit ist die mit höheren Temperaturen zunehmend auftretende Neigung zur Bildung von Stickstoffoxiden aus den Gasbestandteilen der Verbrennungsluft gehemmt. Das Kühlmittel wird nach der Durchströmung des Kühlmittelkanals bevorzugt einer die Abwärme der Brennkraftmaschine nutzenden Einrichtung, zum Beispiel dem Wärmetauscher einer Fahrzeugheizung, zugeleitet. Insbesondere in der Warmlaufphase der Brennkraftmaschine mit niedrigen Temperaturen des Kühlmittels kann mit einem gerade in dieser Phase oft vorliegenden, großen Abgasrückführungs-Massenstrom das Kühlmittel rasch erwärmt und der Fahrzeugheizung zugeführt werden. Somit steht auch im Winterbetrieb der Brennkraftmaschine mit stark Zimmertemperatur unterschreitenden Umgebungstemperaturen der Fahrzeugheizung schnell die zur Aufwärmung des Fahrzeuginneren dringend benötigte Wärme zur Verfügung.

Im Wärmetauscher verlaufen der Abgaskanal und der Kühlmittelkanal nebeneinander, wobei die Wärmeleitwand zur Übertragung von Wärme vom rückzuführenden Abgas auf das Kühlmittel zwischen gegenüberliegenden Abschnitten der Außenwand des Wärmetauschers verläuft und die Kanäle trennt. Die Öffnung in der Außenwand liegt dabei im Kühlmittelkanal der Wärmeleitwand gegenüber. Infolgedessen steht ein ausreichendes Tief zum Einragen des Wärmetauschbehälters des Kraftstoffverteilers in den Kühlmittelkanal zur Verfügung.

Die Öffnung in der Außenwand des Wärmetauschers ist im Endabschnitt der vorgesehenen Wärmetauschstrecke in Durchströmungsrichtung angeordnet, wodurch der Wärmetauschbehälter des Kraftstoffverteilers benachbart des Auslasses des Kühlmittelkanals einragt und somit von dem auf die größtmögliche Temperatur erwärmten Kühlmittelstrom umspült ist. Um zur Erhöhung des Wärmestroms vom Abgas auf das Kühlmittel im Wärmetauscher die Oberfläche der Wärmeleitwand zu erhöhen, erheben sich aus der Wärmeleitwand in den Kühlmittelkanal einragende Rippen. Die Rippen sind vorzugsweise zwischen dem Einlaß des Kühlmittelkanals und etwa dem Abschnitt der Wärmeleitwand, welcher im wesentlichen dem Wärmetauschbehälter des Kraftstoffverteilers gegenüber liegt, angeordnet und fördern die rasche Erwärmung der Kühlmittelströmung vor dem Erreichen des Kraftstoff-Wärmetauschers. Es kann auch vorteilhaft sein, abgasseitig Maßnahmen zur Erhöhung des Wärmeübergangs vorzusehen, beispielsweise durch die Anordnung von in den Abgaskanal ragenden Rippen, die an der Wärmeleitwand angeordnet und mit dieser wärmeleitend verbunden bzw. an dieser angeformt sind.

Der Wärmetauscher besteht vorzugsweise aus Aluminium, welches als Werkstoff bei hoher Festigkeit bekannterweise eine ausgezeichnete Wärmeleitfähigkeit aufweist, so daß im Wärmetauscher ein hoher Wärmestrom vom Abgas durch die Wärmeleitwand in das Kühlmittel fließen kann. Dabei ist der Wärmetauscher vorteilhaft als einstückiges Gußbauteil ausgeführt und ist zum Beispiel im Sandform-Gußverfahren herstellbar.

Der Wärmetauscher ist vorteilhaft derart mit der Abgasrückführungsleitung und mit der Kühlmittelleitung der Brennkraftmaschine gekoppelt, daß der Abgaskanal und der Kühlmittelkanal gleichsinnig durchströmt sind. Dadurch ist mit besonders geringem Bauaufwand die Integration des Wärmetauschers in beide Leitungen ermöglicht und die Temperaturen des Abgases und des Kühlmittels nähern sich logarithmisch einander an, wobei die Temperatur des Kühlmittels im Bereich des in den Kühlmittelkanal einragenden Kraftstoffwärmetauschers am größten ist. Ein weiterer Vorteil der gleichsinnigen Durchströmung der Kanäle im Wärmetauscher ist gegenüber einer Gegenstromwärmeübertragung darin zu sehen, daß die Wandtemperaturen an allen Stellen im arithmetisch mittleren Bereich bleiben. Es kann jedoch auch eine gegensinnige Durchströmung des Abgaskanals und des Kühlmittelkanals vorgesehen sein, wobei ein vergleichsweise höherer Wärmestrom übertragbar ist und somit ein besserer Wirkungsgrad des Wärmetauschers erreichbar ist.

In einer bevorzugten Ausgestaltung der Erfindung ist der Wärmetauscher in besonders kompakter Bauweise in eine Baugruppe gasführender Leitungen der Brennkraftmaschine integriert, welche aus der Abgasrückführungsleitung und solchen Leitungen besteht, welche der Brennkraftmaschine Frischgas zuführen, nämlich den jeweils einem Zylinder der Brennkraftmaschine Frischgas zuführenden Frischgasleitungen und einer die Frischgasleitungen speisenden Verteilerleitung. Diese frischgasführenden Leitungen der Baugruppe bestehen vorteilhaft aus dem gleichen Material, so daß eine einstückige kostengünstige Herstellung erreicht ist. Vorteilhaft sind sowohl die Frischgasleitungen zu den Zylindern und die Einlaßseite des Wärmetauschers als auch die Abgasrückführungsleitung im weiteren Verlauf ausgehend vom Abgaskanal des Wärmetauschers und ein Einlaß der Verteilerleitung mit jeweils gemeinsamen Flanschmitteln verbunden. Die somit entstandene, zusammenhängende Baugruppe ist schnell und auf einfachste Weise bei der Herstellung einer Brennkraftmaschine einbaubar. Der Zylinderflansch verbindet dabei die Einlaßseite des Wärmetauschers und die Frischgasleitungen mit den entsprechenden Ausgangsöffnungen der Zylinder, und der Einlaßflansch verbindet die vom Wärmetauscher ausgehende Abgasrückführungsleitung und die Verteilerleitung mit einem Mischgehäuse. Im Betrieb der Brennkraftmaschine wird in das Mischgehäuse kontinuierlich Frischgas und, abhängig von der Stellung des Abgasrückführungsventils, Abgas eingeführt. Das Abgasrückführungsventil ist dabei in einem Rohrformstück angeordnet, welches am Eingangsflansch einerseits mit der Abgasrückführungsleitung verbunden ist und andererseits in das Mischgehäuse mündet. Das im Mischgehäuse gebildete Verbrennungsluftgemisch bestehend aus rückgeführtem Abgas und sauerstoffreicher Frischluft ist über die Verteilerleitung und die Frischgasleitungen den Zylindern der Brennkraftmaschine zuführbar. Um die kompakte Bauweise weiterhin zu fördern, ist vorgesehen, daß das Rohrformstück mit dem Abgasrückführungsventil und das Mischgehäuse ein gemeinsames Bauteil bilden.

Ausführungsbeispiele der Erfindung sind anhand der Zeichnungen nachstehend näher erläutert. Es zeigen
- Fig. 1: einen Längsschnitt durch eine Vorrichtung zur Wärmeübertragung,
- Fig. 2: eine Draufsicht einer Vorrichtung zur Wärmeübertragung,
- Fig. 3: eine in das Frischgas-Leitungssystem der Brennkraftmaschine integrierte Vorrichtung zur Wärmeübertragung in einem Schnitt entlang der Linie IV-IV in Fig. 4,
- Fig. 4: eine Draufsicht einer in das Frischgas-Leitungssystem einer Brennkraftmaschine integrierten Vorrichtung zur Wärmeübertragung.

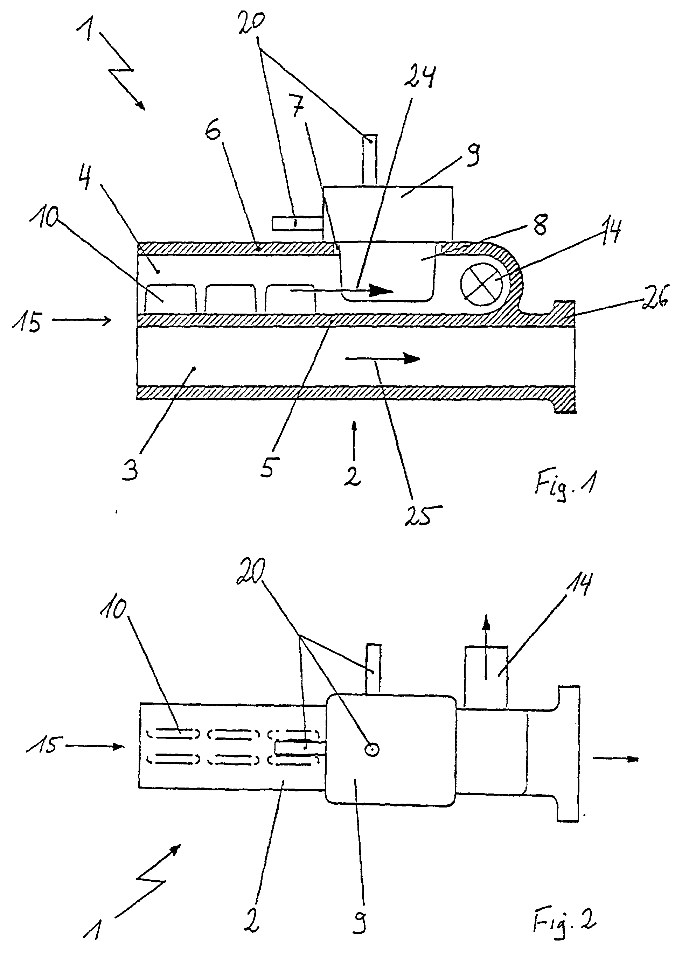

In Fig. 1 ist eine Vorrichtung 1 zur Wärmeübertragung zwischen strömenden Fluiden einer dem Antrieb von Kraftfahrzeugen dienenden Brennkraftmaschine dargestellt. Die Vorrichtung 1 entzieht einem Abgasstrom der Brennkraftmaschine Wärme, welche auf das im Kühlleitungssystem zirkulierende Kühlmittel übertragen wird. Die vom Kühlmittel transportierte Wärme wiederum kann zur Vorwärmung von Kraftstoff vor der Einführung in die Brennräume der Brennkraftmaschine sowie zur Erwärmung des Innenraumes durch eine Fahrzeugheizung genutzt werden. Die Vorrichtung 1 umfaßt einen zweikanaligen Wärmetauscher 2, in dessen Innerem nebeneinander und parallel ein Abgaskanal 3 und ein Kühlmittelkanal 4 verlaufen. Der Abgaskanal 3 ist Teil einer Abgasrückführungsleitung der Brennkraftmaschine und ist durch eine ebene Wärmeleitwand 5 vom Kühlmittelkanal 4 getrennt. In die Außenwand 6 des Wärmetauschers 2 ist gegenüber der Wärmeleitwand 5 eine Öffnung 7 eingebracht, durch die ein wannenartiger Wärmetauschbehälter 8 eines Kraftstoffverteilers 9 in den Kühlmittelkanal 4 einragt.

Der Kraftstoffverteiler ist in der Kraftstoffleitung 20 der Brennkraftmaschine angeordnet, der ein dosierbarer Kraftstoff-Teilstrom entnehmbar ist und zur Erwärmung in den Wärmetauschbehälter 8 leitbar ist. Die Regelung der Dosierung erfolgt durch einen Steuer-Thermostaten im Inneren des Kraftstoffverteilers 9, welcher eine zu hohe Erwärmung des der Brennkraftmaschine zugeführten Kraftstoffes vermeidet. Das Gehäuse des Kraftstoffverteilers 9 überragt dabei das Außenmaß des Wärmetauschbehälters 8 und der Öffnung 7 der Außenwand 6 und liegt somit an der Außenseite des Wärmetauschers 2 an.

Der Abgaskanal 3 und der Kühlmittelkanal 4 sind gleichsinnig in Pfeilrichtung 24, 25 durchströmt, wobei sich bei logarithmischer Annäherung der Fluidtemperaturen geringe mittlere Temperaturen der Wärmeleitwand 5 und des gesamten, aus Aluminium bestehenden Wärmetauschers 2 ergeben.

Die Öffnung 7 in der Außenwand 6 des Wärmetauschers 2 ist in Strömungsrichtung 24 im Endabschnitt des Kühlmittelkanals 4 angebracht, so daß der Wärmetauschbehälter 8 des Kraftstoffverteilers 9 in den bereits erwärmten Kühlmittelstrom einragt. Zwischen der Einlaßseite 15 des Wärmetauschers 2 und dem Abschnitt der Wärmeleitwand 5, welcher dem Wärmtauschbehälter 8 gegenüber liegt, erheben sich aus der Wärmeleitwand 5 in Strömungsrichtung hintereinander angeordnet, weit in den Kühlmittelkanal 4 einragende Rippen 10 zur Erhöhung der Wärmeübergangsfläche der Wärmeleitwand 5. Eine derartige Anordnung von Rippen ist auch im Abgaskanal 3 möglich, wobei die Rippen an der Wärmeleitwand 5 in guter wärmeleitender Verbindung befestigt oder an dieser einstückig angeformt sind. Auf einer kurzen Wärmeübergangsstrecke entsprechend der axialen Länge der Wärmeleitwand 5 ist somit die Übertragung einer großen Wärmemenge aus dem rückzuführenden Abgasstrom im Abgaskanal 3 auf das Kühlmittel im Kühlmittelkanal 4 möglich. Die Außenwand 6 des Wärmetauschers 2 ist in Flucht mit der Wärmeleitwand 5 im Inneren des Wärmetauschers 2 über das Ende des Kühlmittelkanals 4 hinaus geführt und weist in ihrem Endabschnitt einen Flansch 26 zur Verbindung mit einem weiteren Rohrabschnitt der Abgasrückführungsleitung auf. Ein Ausgangsstutzen 14 im Endabschnitt des Kühlmittelkanals 4 führt das erwärmte Kühlmittel aus dem Wärmetauscher 2 rechtwinklig zur Durchströmungsrichtung 24 ab, wie aus Fig. 2 deutlich hervorgeht. Hier ist in einer Draufsicht auf eine Vorrichtung 1 zur Wärmeübertragung der Wärmetauscher 2 dargestellt, an dessen Außenwand der Kraftstoffverteiler 9 mit Anschluß an die Kraftstoffleitung 20 der Brennkraftmaschine anliegt. Zwischen der Einlaßseite 15 des Wärmetauschers 2 und dem Kraftstoffverteiler 9 ragen aus der nicht sichtbaren Wärmeleitwand im Inneren des Wärmetauschers 2 strichliert dargestellte Rippen 10 in den Kühlmittelkanal ein. Die Rippen 10 sind dabei in parallel zueinander geführten Reihen in axialer Richtung des Wärmetauschers 2 angeordnet.

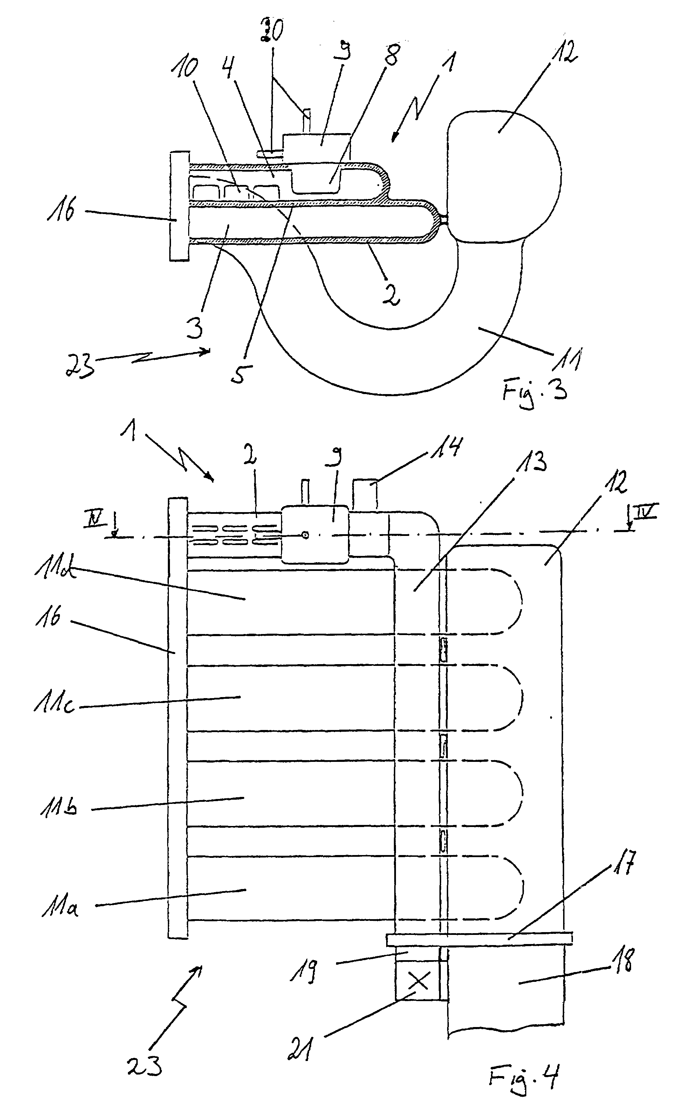

Fig. 3 und Fig. 4 zeigen die in Fig. 1 beschriebene Vorrichtung 1 zur Wärmeübertragung zwischen rückzuführendem Abgas und dem Kühlmittel einerseits und dem Kühlmittel und dem der Brennkraftmaschine zuzuführenden Kraftstoff andererseits, welche in eine gemeinsame Baugruppe der Frischluft der Brennkraftmaschine zuführenden Leitungen 11, 12 integriert ist. Wie Fig. 3 in einem Schnitt entlang der Linie IV-IV in Fig. 4 zeigt, ist die axiale Ausrichtung des Wärmetauschers in Durchströmungsrichtung des Abgaskanals 3 und des Kühlmittelkanals 4 im Inneren des Wärmetauschers 2 orthogonal zu einer Verteilerleitung 12, welche den Einlaßmassenstrom des Frischgases für die Brennkraftmaschine führt und auf mehrere Frischgasleitungen 11 zu den Zylindern der Brennkraftmaschine verteilt. Der Abgaskanal 3 des Wärmetauschers 2 ist Teil einer Abgasrückführungsleitung der Brennkraftmaschine, welche im in Durchströmungsrichtung des Wärmetauschers 2 weiterführenden Teil über das Ende der Wärmetauschstrecke der Wärmeleitwand 5 mit einem orthogonal zur Durchströmungsrichtung angeordneten Auslaß 14 des Kühlmittelkanals 4 hinaus bis an die Verteilerleitung 12 herangeführt ist. Die Abgasrückführungsleitung ist direkt im Anschluß an den Abgaskanal 3 des Wärmetauschers 2 abgewinkelt und ist im weiteren Verlauf parallel zur Verteilerleitung 12 geführt. Zur Verbesserung der Stabilität ist die Abgasrückführungsleitung in ihrem parallel zur Verteilerleitung 12 geführten Abschnitt an dieser befestigt.

Die Frischgasleitungen 11 sind orthogonal sowohl zur Durchströmungsrichtung des Wärmetauschers 2 als auch der Durchströmungsrichtung der Verteilerleitung 12 aus der Verteilerleitung 12 herausgeführt und verlaufen siphonartig gebogen bis zu einem Endabschnitt, welcher etwa auf einer gemeinsamen Höhe des Wärmetauschers 2 und der Verteilerleitung 12 vorgesehen ist. Die Mündungen der Frischgasleitungen 11 sind an einem Zylinderflansch 16 befestigt, welcher zusätzlich mit der Eintrittsseite des Wärmetauschers 2 verbunden ist, an der sowohl das Kühlmittel in den Kühlmittelkanal 4 als auch das rückzuführende Abgas in den Abgaskanal 3 einlaßbar ist. Der Zylinderflansch 16 ist derart an der Brennkraftmaschine befestigt, daß zwischen den Frischgasleitungen 11 und entsprechenden Einlaßöffnungen der Zylinder der Brennkraftmaschine, dem Abgaskanal 3 des Wärmetauschers 2 und einer in die Abgasleitung der Zylinder mündenden Abgasrückführungsleitung sowie zwischen dem Kühlmittelkanal 4 des Wärmetauschers 2 und dem Kühlmittelaustritt der Brennkraftmaschine eine fluidische Verbindung hergestellt ist. Durch den gemeinsamen Zylinder-flansch 16 ist eine sehr kompakte Bauweise einer zusammenhängenden Baugruppe 23 bestehend aus der Verteilerleitung 12, den Frischgasleitungen 11 zu den Zylindern der Brennkraftmaschine und der Vorrichtung 1 zur Wärmeübertragung zwischen den strömenden Medien der Brennkraftmaschine erreicht. Die Frischgasleitungen 11 und Verteilerleitung 12 bestehen ebenfalls aus einem Leichtmetall und sind vorzugsweise einstückig mit dem Wärmetauscher 2 gefertigt, wodurch die kompakte Vorrichtung 1 bei geringem Gesamtgewicht leicht zu handhaben ist und auf eine einfache Weise durch den Zylinderflansch 16 an der Brennkraftmaschine befestigbar ist.

Die siphonartig gebogenen Frischgasleitungen 11 sind auf der den Abgaskanal 3 aufweisenden Seite des Wärmetauschers 2 angeordnet, welche dem Kühlmittelkanal 4 gegenüberliegt. Dadurch liegt gleichsam der Kraftstoffverteiler 9, welcher mit einem wannenartig geformten Wärmetauschbehälter 8 in den Kühlmittelkanal 4 einragt, auf der den Frischgasleitungen 11 gegenüber liegenden Seite des Wärmetauschers 2. Diese Seite des Wärmetauschers 2 ist bequem zugänglich, so daß eine Wartung des Kraftstoffverteilers 9 oder eine manuelle Einstellung dessen Thermostaten und die Herstellung einer fluidischen Verbindung des Kraftstoffverteilers 9 und der Kraftstoffleitung 20 der Brennkraftmaschine erleichtert ist. Natürlich ist auch der Einbau des Kraftstoffverteilers 9 vereinfacht, wobei der Wärmetauschbehälter 8 durch die Öffnung in der Außenwand des Wärmetauschbehälters in den Kühlmittelkanal 4 eingeschoben wird und der Kraftstoffverteiler 9, dessen Außenmaß den Kraftstoffbehälter 8 und die Öffnung überragt, unter Ausbildung einer Schulter an der Außenwand des Wärmetauschers 2 angelegt und befestigt wird. Auf dieser zugänglichen Seite des Wärmetauschers 3 kann auch eine mit dem Auslaß 14 des Kühlmittelkanals 4 verbundene Kühlmittelleitung angeordnet werden, welche das im Kühlmittelkanal 4 erwärmte Kühlmittel der Brennkraftmaschine nach Umströmen der sich aus der Wärmeleitwand 5 erhebenden Rippen 10 und des Wärmetauschbehälters 8 einer Fahrzeugheizung zur Erwärmung des Innenraumes zuführt.

Fig. 4 veranschaulicht in einer Draufsicht auf die zusammenhängende Baugruppe 23 vier parallel zueinander verlaufende Frischgasleitungen 11a-d, welche aus einer orthogonal zu den Frischgasleitungen 11a-d angeordneten Verteilerleitung 12 mit Frischgas für die jeweils zugeordneten Zylinder versorgt werden. Die Vorrichtung 1 zur Wärmeübertragung, welche aus einem Wärmetauscher 2 mit einem Abgaskanal und einem Kühlmittelkanal und einem in den Kühlmittelkanal mit einem Wärmetauschbehälter einragenden Kraftstoffverteiler 9 ist neben der Parallelreihe der Frischgasleitungen 11a-d ebenfalls parallel zu diesen benachbart eines geschlossenen Endabschnittes der Verteilerleitung 12 angeordnet. Die Mündungen der Frischgasleitungen 11a-d, aus denen Frischgas in die jeweils zugeordneten Zylinder der Brennkraftmaschine einströmen, und die Eingangsseite des Wärmetauschers 2 der Vorrichtung 1 zur Wärmeübertragung sind mit einem gemeinsamen Zylinderflansch 16 verbunden, welcher zur fluidischen Verbindung mit den entsprechenden Öffnungen der Brennkraftmaschine an den Zylindern anbringbar ist.

Das nach Durchströmen des Wärmetauschers 2 erwärmte Kühlmittel wird aus dem Kühlmittelkanal im Inneren des Wärmetauschers 2 durch einen orthogonal zur Durchströmungsrichtung angeordneten Austrittsstutzen 14 abgeführt, und einem (nicht dargestellten) Heizungswärmetauscher einer Fahrzeugheizung zugeführt. Mit dem Austritt des Abgaskanals im Inneren des Wärmetauschers 2 ist der weiterführende Teil einer Abgasrückführungsleitung 13 verbunden, welche benachbart des Austrittes des Wärmetauschers 2 rechtwinklig gebogen ist und im weiteren Verlauf parallel zur Verteilerleitung 12 geführt ist. Die Länge des parallel zur Verteilerleitung 12 geführten Abschnittes der Abgasrückführungsleitung 13 entspricht etwa der Länge der Verteilerleitung 12. Der Endabschnitt der Abgasrückführungsleitung 13 und der geöffnete Endabschnitt der Verteilerleitung 12 zum Einlaß von Frischgas sind mit einem gemeinsamen Einlaßflansch 17 verbunden, welcher senkrecht zur Durchströmungsrichtung beider Leitungen 12, 13 angeordnet ist. Somit ist in sehr kompakter Bauweise die zusammenhängende Baugruppe 23 mit zwei Befestigungsflanschen 16, 17 ausgebildet und ist auf einfachste Weise mit dem Zylinderflansch 16 an der Brennkraftmaschine einerseits und mit dem Einlaßflansch 17 an einem Mischgehäuse 18 befestigbar. Die Baugruppe 23 ist daher rasch bei der Montage eines Fahrzeuges in dessen Antriebseinheit einbaubar.

In das Mischgehäuse 18 mündet die Abgasrückführungsleitung 13 mit einem regelbaren Abgasrückführungsventil 21, welches zum Beispiel durch ein Rohrformstück 19 am Einlaßflansch 17 einerseits und am Mischgehäuse 18 andererseits befestigt ist. Abhängig von der Stellung des Abgasrückführungsventils und damit des rückgeführten Abgas-Massenstroms wird im Mischgehäuse mit der ebenfalls zugeführten Frischluft ein Verbrennungsluftgemisch gebildet und durch den Eingangsflansch 17 hindurch in die Verteilerleitung 12 geleitet, dessen Sauerstoffgehalt abhängig von der Abgasrückführungsrate ist.

Die zusammenhängende Baugruppe 23 vereinigt in sehr kompakter Bauweise eine Vielzahl von Funktionen, welche die Qualität des Betriebsverhaltens der Brennkraftmaschine gewährleisten. Die Führung der Abgase in der Abgasrückführungsleitung 13 und der Frischgase in der Verteilerleitung 12 und den Frischluftleitungen 11a-d ist sehr eng und platz- und materialsparend. Die Länge und die siphonartige Krümmung der Frischgasleitungen 11a-d (siehe Fig. 3) ist jedoch derart ausgebildet, daß der Abstand zwischen dem Zylinderflansch 16 und der Verteilerleitung 12 derart groß ist, daß der hierin aufgenommene Wärmetauscher 2 der Vorrichtung zur Wärmeübertragung, dessen axiale Länge diesem Abstand weniger dem Querschnitt der Abgasrückführungsleitung 13 entspricht, eine genügend lange Wärmeübergangsstrecke zur Verfügung stellt. Dieser Wärmeübergangsstrecke entspricht die Erstreckung der Wärmeleitwand im Inneren des Wärmetauschers in Durchströmungsrichtung, durch die ein Wärmestrom vom wärmeren Abgas im Abgas auf das Kühlmittel im Kühlmittelkanal übertragen wird. Dabei wird dem Abgas, welches über die Abgasrückführungsleitung bei Freigabe des Abgasrückführungsventils als Teil der Verbrennungsluft wieder den Zylindern der Brennkraftmaschine zugeführt wird, Wärme entzogen, wobei nach Mischung der abgekühlten Abgase mit Frischluft im Mischgehäuse Verbrennungsluft mit niedriger Temperatur bereitet wird. In der Folge wird durch die niedrige Temperatur die Neubildung von Stickstoffoxiden aus den Bestandteilen der Verbrennungsluft gehemmt.

Die dem Abgas entzogene Wärmemenge erwärmt nach dem Eintritt in den Kühlmittelkanal das darin geführte Kühlmittel, welches nach dem Austritt aus dem Wärmetauscher die aufgenommene Wärmemenge einer Fahrzeugheizung zur Erwärmung des Fahrzeuginnenraumes zuleitet. Insbesondere in der Warmlaufphase der Brennkraftmaschine, während der das Kühlmittel im Motorblock der Brennkraftmaschine noch wenig erwärmt ist, kann der Temperaturanstieg des Kühlmittels stark beschleunigt werden und der Fahrzeugheizung rascher eine ausreichende Wärmemenge zugeführt werden. Prinzipbedingt erfolgt die Erwärmung des Kühlmittels im Wärmetauscher proportional zum rückgeführten Abgas-massenstrom. Gerade bei dem oft vorliegenden Teillastbetrieb der Brennkraftmaschine während der Warmlaufphase kann durch die in diesem Fall hohe Abgasrückführungsrate der Fahrzeugheizung rasch die benötigte Wärmemenge bereitgestellt werden.Im Vollastbetrieb der Brennkraftmaschine ohne Abgasrückführung erfolgt keine Wärmeübertragung auf das Kühlmittel im Wärmetauscher, jedoch bewirkt in dieser Betriebsart eine schnelle Erwärmung des Kühlmittels durch die Brennkraftmaschine selbst, daß ein ausreichender Heizungsbetrieb für den Fahrzeuginnenraum möglich ist. Darüberhinaus verhindert die Sperrung der Abgasrückführungsleitung durch das Abgasrückführungsventil im Vollastbetrieb der Brennkraftmaschine die dann unerwünschte zusätzliche Erwärmung des Kühlmittels im Wärmetauscher, was zu einem unnötigen Temperaturanstieg des Kühlmittels führt, dem mit einer entsprechenden Kühlleistung eines Kühlmittelkühlers begegnet werden muß. Bei niedrigen Umgebungstemperaturen, zum Beispiel im Winterbetrieb der Brennkraftmaschine, ist durch die rekuperative Wärmebereitstellung rasch ein wirkungsvoller Betrieb der Fahrzeugheizung gegeben.

Die Vorwärmung von Kraftstoff zur Erhöhung der Zündwilligkeit oder gar bei sehr tiefen Temperaturen zur Herstellung der Zündwilligkeit, ist bei der erfindungsgemäßen Vorrichtung durch den in den Kühlmittelkanal des Wärmetauschers einragenden, wannenartigen Wärmetauschbehälter eines Kraftstoffverteilers bei kompakter, sehr platzsparender Bauweise möglich.

Die zusammenhängende Baugruppe mit der integrierten Vorrichtung zur Wärmeübertragung eignet sich sowohl zum Betrieb von aufgeladenen Brennkraftmaschinen als auch von ansaugenden Brennkraftmaschinen, welche jeweils entweder im Diesel- oder im Otto-Verfahren arbeiten.

## Patentansprüche

1. Vorrichtung zur Übertragung von Wärme zwischen strömenden Medien unterschiedlicher Temperaturen für eine Brennkraftmaschine, insbesondere zum Antrieb von Kraftfahrzeugen, welche einen Wärmetauscher (2) mit einem Abgas der Brennkraftmaschine führenden Abgaskanal (3) und einem parallel zum Abgaskanal (3) verlaufenden, Kühlmittel der Brennkraftmaschine führenden Kühlmittelkanal (4) umfaßt, wobei eine Wärmeleitwand (5) im Inneren des Wärmetauschers (2) den Abgaskanal (3) einerseits und den Kühlmittelkanal (4) andererseits begrenzt,
**dadurch gekennzeichnet, daß** in einer Außenwand (6) des Wärmetauschers (2) eine Öffnung (7) vorgesehen ist, durch die ein an einem Kraftstoffverteiler (9) ausgebildeter Wärmetauschbehälter (8) in den Kühlmittelkanal (4) einragt und der Wärmetauschbehälter (8) vom der Brennkraftmaschine zuzuführendem Kraftstoff durchströmbar ist.

2. Vorrichtung nach Anspruch 1,
**dadurch gekennzeichnet, daß** der Abgaskanal (3) Teil einer Abgasrückführungsleitung (13) der Brennkraftmaschine ist, welche von einem regelbaren Abgasrückführungsventil (21) beherrscht ist.

3. Vorrichtung nach Anspruch 1 oder 2,
**dadurch gekennzeichnet, daß** die Wärmeleitwand eben zwischen gegenüberliegenden Abschnitten der Außenwand (6) des Wärmetauschers (2) verläuft und den Abgaskanal (3) und den Kühlmittelkanal (4) voneinander trennt, wobei die Öffnung (7) der Außenwand (6) der Wärmeleitwand (5) im Kühlmittelkanal (4) gegenüberliegt.

4. Vorrichtung nach Anspruch 3,
**dadurch gekennzeichnet, daß** der Abgaskanal (3) und der Kühlmittelkanal (4) eine gemeinsame Einlaßseite (15) im Wärmetauscher (2) aufweisen.

5. Vorrichtung nach einem der Ansprüche 1 bis 4,
**dadurch gekennzeichnet, daß** an einen Auslaß (14) im Endabschnitt des Kühlmittelkanals (4) eine Kühlmittelleitung zu einer die Kühlmittelwärme nutzenden Einrichtung, insbesondere eine Fahrzeugheizung, anschließbar ist.

6. Vorrichtung nach Anspruch 5,
**dadurch gekennzeichnet, daß** der Wärmetauschbehälter (8) benachbart des Auslasses (14) des Kühlmittelkanals (4) angeordnet ist.

7. Vorrichtung nach einem der Ansprüche 4 bis 6,
**dadurch gekennzeichnet, daß** sich aus der Wärmeleitwand (5) zwischen der Einlaßseite (15) des Wärmetauschers (2) und einem dem Wärmetauschbehälter (8) gegenüberliegenden Abschnitt der Wärmeleitwand (5) in den Kühlmittelkanal (4) ragende Rippen (10) erheben.

8. Vorrichtung nach einem der Ansprüche 4 bis 7,
**dadurch gekennzeichnet, daß** im Abgaskanal (3) an der Wärmeleitwand (5) angeordnete Rippen vorgesehen sind.

9. Vorrichtung nach einem der Ansprüche 1 bis 8,
**dadurch gekennzeichnet, daß** der Wärmetauscher (2) aus Aluminium besteht.

10. Vorrichtung nach Anspruch 9,
**dadurch gekennzeichnet, daß** der Wärmetauscher (2) ein einstückiges Gußbauteil ist.

11. Vorrichtung nach einem der Ansprüche 1 bis 10,
**dadurch gekennzeichnet, daß** der Wärmetauscher (2) in eine Baugruppe (23) gasführender Leitungen integriert ist, welche aus der Abgasrückführungsleitung (13) und jeweils einem Zylinder der Brennkraftmaschine Frischgas zuführenden Frischgasleitungen (11) sowie einer die Frischgasleitungen (11) speisenden Verteilerleitung (12) besteht.

12. Vorrichtung nach Anspruch 11,
**dadurch gekennzeichnet, daß** die Baugruppe (23) mit den gasführenden Leitungen (11, 12, 13) aus dem gleichen metallischen Werkstoff besteht wie der Wärmetauscher (2) und mit diesem einstückig ausgeführt ist.

13. Vorrichtung nach Anspruch 11 oder 12,
**dadurch gekennzeichnet, daß** sowohl die Frischgasleitungen zu den Zylindern der Brennkraftmaschine und die Einlaßseite (15) des Wärmetauschers (2) als auch die Abgasrückführungsleitung (13) im weiteren Verlauf ausgehend vom Abgaskanal (3) des Wärmetauschers (2) und ein Einlaß der Verteilerleitung (12) mit gemeinsamen Flanschmitteln (16, 17) verbunden sind.

## Claims

1. Device for the transfer of heat between flowing media at different temperatures, for an internal combustion engine, particularly for driving vehicles, which includes a heat exchanger (2) with an exhaust conduit (3), which directs the exhaust gas of the internal combustion engine, and a coolant conduit (4) which directs coolant to the internal combustion engine and runs parallel to the exhaust conduit (3), whereby the heat-conducting wall (5) inside the heat-exchanger (2) adjoins the exhaust conduit (3) and the coolant conduit (4),
**characterized in that**, an opening (7) is provided in a surface (6) of the heat-exchanger (2) through which a heat-exchange vessel (8) extends into the coolant conduit (4) and through which the fuel to be fed to the internal combustion engine can flow through the heat-exchange vessel (8).

2. Device in accordance with claim 1,
**characterized in that**
the exhaust conduit (3) is part of an exhaust return conduit (13), of the internal combustion engine, which is controlled by an adjustable exhaust return valve (21).

3. Device in accordance with claim 1 or 2,
**characterized in that** the heat-conducting wall runs evenly between opposite sections of the surface (6) of the heat-exchanger (2) and separates the exhaust conduit (3) and the coolant conduit (4), whereby the opening (7) in the surface (6) lies opposite the heat-conducting wall (5) in the coolant conduit (4).

4. Device in accordance with claim 3,
**characterized in that** the exhaust conduit (3) and the coolant conduit (4) have a common inlet side in the heat-exchanger (2).

5. Device in accordance with one of claims 1 to 4,
**characterized in that** a coolant conduit to a device, particularly a vehicle heating system, using the coolant heat, can be connected onto an outlet (14) in the end section of the coolant conduit (4).

6. Device in accordance with claim 5,
**characterized in that** the heat-exchange vessel (8) is disposed adjoining the outlet (14) of the coolant conduit (4).

7. Device in accordance with one of claims 4 to 6,
**characterized in that**, between the inlet side (15) of the heat-exchanger (2) and a section of the heat-conducting wall (5) lying opposite the heat-exchange vessel (8), ribs (10) rise, extending into the coolant conduit (4), from the heat-conducting wall (5).

8. Device in accordance with one of claims 4 to 7,
**characterized in that** ribs, disposed on the heat-exchange wall (5) in the exhaust conduit (3), are provided.

9. Device in accordance with one of claims 1 to 8,
**characterized in that** the heat-exchanger (2) is made of aluminium.

10. Device in accordance with claim 9,
**characterized in that** the heat-exchanger (2) is a single cast part.

11. Device in accordance with one of claims 1 to 10,
**characterized in that** the heat-exchanger (2) is integrated into ductwork which conducts gas to a subassembly (23) and which comprises the exhaust return conduit (13) and in each case carburated fuel conduits (11) supplying carburated fuel to one cylinder of the internal combustion engine and a distribution conduit (12) feeding one of the carburated fuel conduits (11).

12. Device in accordance with claim 11,
**characterized in that** the subassembly (23) with conduits (11, 12, 13) conveying gas is made of the same metal material as the heat-exchanger (2) and is implemented, with the latter, as a single part.

13. Device in accordance with claim 11 or 12,
**characterized in that** both the carburated fuel conduits to the cylinders of the internal combustion engine and the inlet side (15) of the heat-exchanger (2) and also the exhaust return conduit (13) in its further course, starting from the exhaust conduit (3) of the heat-exchanger (2), and an inlet of the distribution conduit (12) are connected with common flanging means (16, 17).

## Revendications

1. Dispositif pour la transmission de chaleur entre des fluides en écoulement à des températures différentes, pour un moteur à combustion interne, en particulier pour l'entraînement de véhicules automobiles, qui comprend un échangeur de chaleur (2) avec un canal à gaz d'échappement (3) qui mène les gaz d'échappement du moteur à combustion interne, et un canal à fluide réfrigérant (4) qui s'étend parallèlement au canal à gaz d'échappement (3) et qui mène un réfrigérant du moteur à combustion interne, dans lequel une paroi conductrice de la chaleur (5) à l'intérieur de l'échangeur de chaleur (2) délimite d'une part le canal à gaz d'échappement (3) et d'autre part le canal à réfrigérant (4),
**caractérisé en ce que** dans une paroi extérieure (6) de l'échangeur de chaleur (2) est prévue une ouverture (7) à travers laquelle le récipient de l'échangeur de chaleur (8), réalisé sur un distributeur de carburant (9), pénètre dans le canal à réfrigérant (4), et le récipient de l'échangeur de chaleur (8) est susceptible d'être traversé par l'écoulement du carburant admis au moteur à combustion interne.

2. Dispositif selon la revendication 1, **caractérisé en ce que** le canal à gaz d'échappement (3) fait partie d'une conduite de recyclage (13) des gaz d'échappement dans le moteur à combustion interne, ladite conduite étant commandée par une valve de recyclage de gaz d'échappement (21) réglable.

3. Dispositif selon l'une ou l'autre des revendications 1 et 2, **caractérisé en ce que** la paroi conductrice de la chaleur s'étend sous forme plane entre des tronçons mutuellement opposés de la paroi extérieure (6) de l'échangeur de chaleur (2) et sépare le canal à gaz d'échappement (3) et le canal à réfrigérant (4) l'un de l'autre, et **en ce que** l'ouverture (7) de la paroi extérieure (6) est située à l'opposé de la paroi conductrice de la chaleur (5) dans le canal à réfrigérant (4).

4. Dispositif selon la revendication 3, **caractérisé en ce que** le canal à gaz d'échappement (3) et le canal à réfrigérant (4) présentent un côté d'entrée commun (15) dans l'échangeur de chaleur (2).

5. Dispositif selon l'une des revendications 1 à 4, **caractérisé en ce qu'**une conduite de réfrigérant qui mène à un dispositif utilisant la chaleur du réfrigérant, en particulier une installation de chauffage du véhicule, est susceptible d'être raccordée à une sortie (14) dans le tronçon terminal du canal à réfrigérant (4).

6. Dispositif selon la revendication 5, **caractérisé en ce que** le récipient de l'échangeur de chaleur (8) est agencé au voisinage de la sortie (14) du canal à réfrigérant (4).

7. Dispositif selon l'une des revendications 4 à 6, **caractérisé en ce que** des nervures (10) qui se projettent dans le canal à réfrigérant (4) se dressent depuis la paroi conductrice de la chaleur (5) entre le côté entrée (15) de l'échangeur de chaleur (2) et un tronçon de la paroi conductrice de la chaleur (5) à l'opposé du récipient de l'échangeur de chaleur (8).

8. Dispositif selon l'une des revendications 4 à 7, **caractérisé en ce qu'**il est prévu des nervures dans le canal à gaz d'échappement (3), agencées sur la paroi conductrice de la chaleur (5).

9. Dispositif selon l'une des revendications 1 à 8, **caractérisé en ce que** l'échangeur de chaleur (2) est en aluminium.

10. Dispositif selon la revendication 9, **caractérisé en ce que** l'échangeur de chaleur (2) un composant de fonderie en une seule pièce.

11. Dispositif selon l'une des revendications 1 à 10, **caractérisé en ce que** l'échangeur de chaleur (2) est intégré dans un groupe structurel (23) de conduites guidant les gaz, formé par la conduite de recyclage (13) des gaz d'échappement et des conduites de gaz (11) qui mènent des gaz frais à des cylindres respectifs du moteur à combustion interne, ainsi qu'une conduite de distribution (12) qui alimente les conduites de gaz frais (11).

12. Dispositif selon la revendication 11, **caractérisé en ce que** le groupe structurel (28) avec les conduites guidant les gaz (11, 12, 13) est réalisé dans le même matériau que l'échangeur de chaleur (2) et est réalisé d'une seule pièce avec celui-ci.

13. Dispositif selon l'une ou l'autre des revendications 11 et 12, **caractérisé en ce que** les conduites de gaz frais vers les cylindres du moteur à combustion interne et vers le côté d'entrée (15) de l'échangeur de chaleur (2) tout comme la conduite de recyclage de gaz d'échappement (13) sont reliées par des organes à bride communs (16, 17) dans la suite du tracé, en partant du canal de gaz d'échappement (3) de l'échangeur de chaleur (2) et d'une entrée de la conduite de distribution (12)
